# FASCICULE DE BREVET EUROPEEN

(11) **EP 0 786 534 B1**
(45) Date de publication et mention de la délivrance du brevet: **23.07.2003**
(21) Numéro de dépôt: 97400020.0
(22) Date de dépôt: 06.01.1997
(51) Int. Cl.: C22C 38/26, C22C 38/28, F16J 3/04

(54) **Utilisation d'un acier inoxydable ferritique pour la fabrication par hydroformage d'un soufflet déformable élastiquement et soufflet obtenu**
Verwendung eines rostfreies ferritisches Stahl zur Herstellung mittels das Hydroforming-Prozess einer Wellrohrfeder, und Wellrohrfedern, hergestellt nach diesen Verfahren
Use of a stainless ferritic steel for producing by hydroforming of resilient bellows and bellows, produced in this way

(30) Priorité: 25.01.1996 FR 9600877
(43) Date de publication de la demande: 30.07.1997
(73) Titulaire: ECIA - EQUIPEMENTS ET COMPOSANTS POUR L'INDUSTRIE AUTOMOBILE, F-25400 Audincourt (FR)
(72) Inventeur: Lecard, Jean-Pierre, 88260 Lerrain (FR)
(74) Mandataire: Bouget, Lucien

(56) Documents cités:
- EP-A- 0 145 471
- EP-A- 0 391 054
- EP-A- 0 516 267
- FR-A- 2 392 295
- US-A- 4 125 929
- PATENT ABSTRACTS OF JAPAN vol. 16, no. 584 (C-1013), 24 Décembre 1992 & JP 04 235256 A (KAWASAKI STEEL CORP.), 24 Août 1992,
- "Werkstoffe für Abgassysteme bei Personenkraftwagen", R.Grundmann et al, Thyssen technische Berichte, 2/ 1988

## Description

L'invention concerne l'utilisation d'un acier inoxydable ferritique pour la fabrication par hydroformage d'un soufflet déformable élastiquement et le soufflet obtenu.

Dans certains secteurs de la construction mécanique et en particulier dans le secteur de la construction automobile, il est connu d'utiliser des organes déformables élastiquement de forme sensiblement tubulaire, appelés soufflets et comportant des ondes s'étendant parallèlement les unes aux autres dans des plans sensiblement perpendiculaires à l'axe du soufflet.

De tels soufflets qui sont utilisés par exemple pour transmettre ou absorber des déplacements relatifs entre deux pièces, tout en maintenant une étanchéité aux gaz, sont soumis, pendant leur utilisation, à des sollicitations en flexion, en compression et à des vibrations.

De plus, de tels soufflets peuvent être utilisés dans des conditions telles qu'ils se trouvent en contact soit avec un gaz atmosphérique à température ambiante soit avec un flux de gaz chauds ou encore simultanément en contact par leur face externe avec l'air atmosphérique et par leur face interne avec un flux de gaz chaud corrosif.

En particulier, dans certaines applications relatives à la construction automobile, le soufflet peut venir en contact avec des gaz d'échappement à haute température provenant d'un moteur.

Pour assurer une bonne tenue mécanique et une bonne résistance à la corrosion de soufflets venant en contact avec des gaz chauds tels que des gaz d'échappement d'un moteur, on utilise généralement, pour la réalisation de ces soufflets, un acier inoxydable austénitique voire réfractaire ou un alliage à base de nickel.

De tels soufflets en acier inoxydable austénitique voire réfractaire ou en alliage à base de nickel peuvent être réalisés par hydroformage ou formage mécanique, comme il est indiqué par exemple dans le FR-A-2.703.124 qui est relatif à un soufflet dont les ondes comportent deux flancs raccordés entre eux et à des flancs d'ondes voisines par des portions en forme d'arcs-de-cercle ; les flancs qui sont symétriques par rapport à un plan perpendiculaire à l'axe du soufflet comportent au moins deux portions droites faisant un certain angle et reliées par une portion en forme d'arc-de-cercle.

Un tel soufflet qui peut supporter des débattements axiaux et angulaires relativement importants assure une atténuation des vibrations dues au passage d'un écoulement gazeux et limite les émissions acoustiques en service.

Cependant, l'utilisation d'aciers inoxydables austénitiques voire réfractaires ou d'alliages à base de nickel pour la réalisation des soufflets présente certains inconvénients en ce qui concerne la mise en oeuvre des soufflets et leur prix de revient.

En effet, les aciers inoxydables austénitiques voire réfractaires ou les alliages à base de nickel possèdent un coefficient de dilatation très différent du coefficient de dilatation des aciers de construction utilisés pour la réalisation des pièces qui sont assemblées avec le soufflet ou associées à celui-ci pour réaliser un mécanisme. Il en résulte des contraintes qui peuvent être importantes et qui sont liées à la dilatation différentielle du soufflet et des pièces environnantes.

En outre, du fait de la présence d'une proportion importante de nickel dans le matériau, les aciers inoxydables austénitiques voire réfractaires ou les alliages à base de nickel ont un coût très élevé. Il en résulte une augmentation sensible du prix de revient des soufflets.

Dans le EP-A-0.391.054, on a proposé d'utiliser un acier ferritique contenant de 14,5 à 16 % de chrome pour réaliser des pièces rigides de lignes d'échappement telles que des chemises ou des tubes.

Dans la publication 110 : 217010CA de 1988, on mentionne l'utilisation de différents aciers inoxydables ferritiques et austénitiques dont un acier renfermant de 17 à 19 % de chrome pour la fabrication de pièces d'échappement de véhicule automobile.

Cependant, jusqu'ici, on n'a jamais proposé d'utiliser des aciers inoxydables ferritiques pour réaliser des soufflets qui sont susceptibles de venir en contact avec des gaz chauds.

Le but de l'invention est de proposer l'utilisation d'un acier inoxydable ferritique contenant, en poids, une proportion de carbone inférieure ou égale à 0,02 %, de 16 à 18 % de chrome, de 0,2 à 0,8 % de niobium, de 0,1 à 0,6 % de titane et de 1 à 2 % de manganèse, le solde de l'acier ferritique, à l'exception des impuretés inévitables, étant constitué par du fer, pour la fabrication par hydroformage d'un soufflet déformable élastiquement destiné à venir en contact avec des gaz chauds, tels que des gaz d'échappement d'un moteur.

L'invention est également relative à un soufflet déformable élastiquement, de forme générale tubulaire et présentant des ondes successives dans sa direction axiale, destiné à venir en contact avec des gaz chauds, tels que des gaz d'échappement d'un moteur et obtenu par hydroformage, ce soufflet permettant d'éviter des inconvénients dus à des dilatations différentielles lors de son montage dans un ensemble mécanique et étant d'un prix de revient limité.

Dans ce but, le soufflet est réalisé en un acier inoxydable ferritique contenant, en poids, une proportion de carbone inférieure ou égale à 0,02 %, de 16 à 18 % de chrome, de 0,2 à 0,8 % de niobium, de 0,1 à 0,6 % de titane et de 1 à 2 % de manganèse, le solde de l'acier ferritique, à l'exception des impuretés inévitables, étant constitué par du fer.

Afin de bien faire comprendre l'invention, on va maintenant décrire, à titre d'exemple non limitatif, en se référant à la figure jointe en annexe, un soufflet déformable élastiquement, en acier inoxydable ferritique.

La figure unique représente une vue latérale d'un soufflet en acier inoxydable ferritique suivant l'invention.

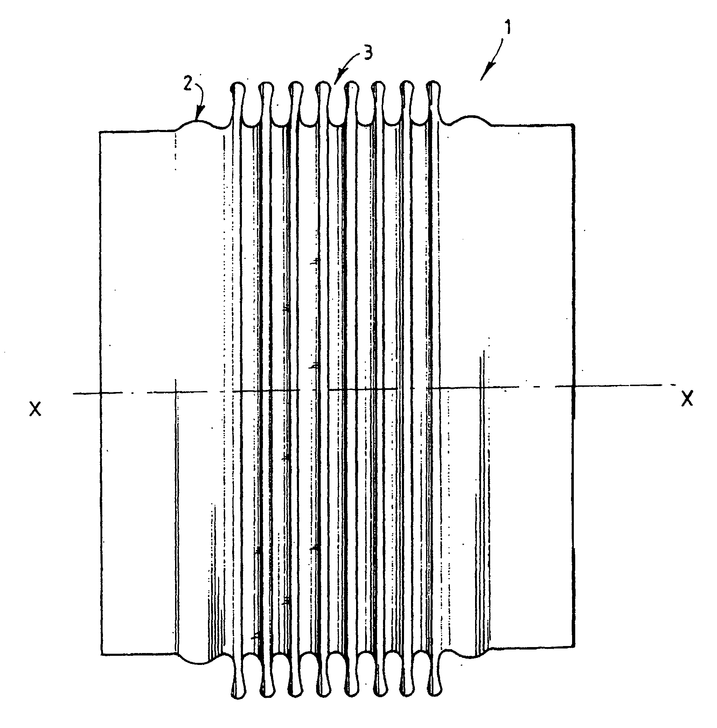

Le soufflet représenté sur la figure 1 présente les caractéristiques géométriques du soufflet décrit et revendiqué dans le FR-A-2.703.124. Le soufflet désigné de manière générale par le repère 1 qui est réalisé par hydroformage comporte, de manière classique, une paroi 2 de forme tubulaire ayant pour axe de symétrie l'axe X-X. La paroi 2 du soufflet 1 comporte des ondes 3 s'étendant parallèlement les unes aux autres et qui sont symétriques par rapport à des plans perpendiculaires à l'axe X-X répartis à des distances régulières suivant la direction de l'axe X-X.

Les ondes du soufflet 1 présentent également les caractéristiques géométriques qui ont été rappelées ci-dessus.

Selon l'invention, le soufflet 1 est réalisé par hydroformage d'une ébauche tubulaire en acier inoxydable ferritique contenant à peu près 17 % de chrome.

Le soufflet est réalisé en acier ferritique commercialisé sous la désignation F17TiNb par la société UGINE. Un tel acier inoxydable ferritique renferme en poids, jusqu'à 0,02 % de carbone, de 16 à 18 % de chrome, de 0,2 à 0,8 % de niobium, de 0,1 à 0,6 % de titane et de 1 à 2 % de manganèse, le solde de l'alliage, à l'exception des impuretés inévitables, étant constitué par du fer.

Le soufflet en acier ferritique obtenu présente l'avantage de posséder un coefficient de dilatation thermique sensiblement identique à celui des aciers de construction utilisés pour la réalisation des pièces destinées à coopérer avec le soufflet et à constituer son environnement, lors du montage du soufflet sur un mécanisme. Les contraintes liées à la dilatation différentielle sont donc pratiquement inexistantes.

En outre, le coût de l'acier inoxydable ferritique est sensiblement plus faible que le coût d'un acier réfractaire ou d'un alliage à base de nickel. On réalise ainsi une économie de l'ordre de 30 % sur le prix de revient du soufflet.

En outre, le soufflet en acier ferritique résiste à l'oxydation en service et ne produit pas de couche d'oxyde ayant tendance à se craqueler à la surface du soufflet.

C'est ainsi que le soufflet peut présenter une forme géométrique différente de celle qui a été décrite et représentée et qui correspond à une forme optimisée.

Enfin, le soufflet suivant l'invention peut être utilisé dans de nombreuses applications et en particulier dans tous les cas où le soufflet est soumis au contact d'un flux de gaz chauds.

## Revendications

1. Utilisation d'un acier inoxydable ferritique contenant, en poids, une proportion de carbone inférieure ou égale à 0,02 %, de 16 à 18 % de chrome, de 0,2 à 0,8 % de niobium, de 0,1 à 0,6 % de titane et de 1 à 2 % de manganèse, le solde de l'acier ferritique, à l'exception des impuretés inévitables, étant constitué par du fer, pour la fabrication par hydroformage d'un soufflet déformable élastiquement de forme générale tubulaire et présentant des ondes successives dans sa direction axiale, destiné à venir en contact avec des gaz chauds, tels que des gaz d'échappement d'un moteur.

2. Soufflet déformable élastiquement, de forme générale tubulaire et présentant des ondes successives (3) dans sa direction axiale X-X, destiné à venir en contact avec des gaz chauds, tels que des gaz d'échappement d'un moteur, et obtenu par hydroformage, **caractérisé par le fait qu'**il est réalisé en un acier inoxydable ferritique contenant, en poids, une proportion de carbone inférieure ou égale à 0,02 %, de 16 à 18 % de chrome, de 0,2 à 0,8 % de niobium, de 0,1 à 0,6 % de titane et de 1 à 2 % de manganèse, le solde de l'acier ferritique, à l'exception des impuretés inévitables, étant constitué par du fer.

## Patentansprüche

1. Verwendung eines rostfreien ferritischen Stahls, welcher in Gewichtsprozent einen Kohlenstoffanteil von höchstens 0,02 %, 16 bis 18 % Chrom, 0,2 bis 0,8 % Niob, 0,1 bis 0,6 % Titan und 1 bis 2 % Mangan enthält, wobei der Rest dieses ferritischen Stahls mit Ausnahme von unvermeidbaren Verunreinigungen aus Eisen besteht, der für die Herstellung mittels des Hydroforming-Prozesses einer elastisch verformbaren allgemein rohrförmigen Wellrohrfeder eingesetzt wird, die in ihrer axialen Richtung sukzessive Wellen aufweist, und die mit heißen Gasen, wie zum Beispiel den Abgasen eines Motors in Berührung kommt.

2. Elastisch verformbare allgemein rohrförmige Wellrohrfeder, welche in ihrer axialen Richtung X-X sukzessive Wellen aufweist, und die mit heißen Gasen, wie zum Beispiel den Abgasen eines Motors in Berührung kommt, und die mittels des Hydroforming-Prozesses hergestellt wird,
**dadurch gekennzeichnet,dass**
sie aus einem ferritischen Stahl hergestellt wird, der in Gewichtsprozent einen Kohlenstoffanteil von höchstens 0,02 %, 16 bis 18 % Chrom, 0,2 bis 0,8 % Niob, 0,1 bis 0,6 % Titan und 1 bis 2 -% Mangan enthält, wobei der Rest dieses ferritischen Stahls mit Ausnahme von unvermeidbaren Verunreinigungen aus Eisen besteht.

## Claims

1. Use of a stainless ferritic steel containing, by weight, a proportion of carbon lower than or equal to 0.02%, from 16 to 18% of chromium, from 0.2 to 0.8% of niobium, from 0.1 to 0.6% of titanium and from 1 to 2% of manganese, the rest of the ferritic steel, with the exception of unavoidable impurities, consisting of iron, for producing by hydroforming elastically deformable bellows generally tubular in shape and with successive folds in their axial direction, intended to come into contact with hot gases such as exhaust gases from an engine.

2. Elastically deformable bellows, generally tubular in shape and with successive folds (3) in their axial direction X-X, intended to come into contact with hot gases, such as exhaust gases from an engine, and produced by hydroforming, **characterised in that** they are made from a stainless ferritic steel containing, by weight, a proportion of carbon lower than or equal to 0.02%, from 16 to 18% of chromium, from 0.2 to 0.8% of niobium, from 0.1 to 0.6% of titanium and from 1 to 2% of manganese, the rest of the ferritic steel, with the exception of unavoidable impurities, consisting of iron.
